# DEMANDE DE BREVET EUROPEEN

(11) **EP 4 725 804 A1**
(43) Date de publication de la demande: **15.04.2026**
(21) Numéro de dépôt: 25207997.5
(22) Date de dépôt: 10.10.2025
(51) Int. Cl.: B62D 21/15, B60J 5/10, B62D 25/08

(54) **AGENCEMENT POUR VÉHICULE COMPRENANT UNE PORTE DE COFFRE MUNIE D'UNE TRAVERSE ARRIÈRE**

(30) Priorité: 11.10.2024 FR 2411016
(71) Demandeur: Renault s.a.s, 92100 Boulogne Billancourt (FR)
(72) Inventeur: BEZEAULT, Loic, 78280 GUYANCOURT (FR); GIRARDI, Lionel, 78280 GUYANCOURT (FR)

(57) **Abrégé**

L'invention concerne un agencement (2) pour un véhicule (1), notamment pour un véhicule automobile, comprenant un châssis (3) comprenant un longeron arrière gauche (31) agencé à gauche et un longeron arrière droit (32) agencé à droite, une porte de coffre (10) battante ou de type hayon, la porte de coffre (10) s'étendant jusqu'au moins en-dessous des longerons arrière droit et gauche (31, 32) en position fermée de la porte de coffre (10), la porte de coffre (10) comprenant une traverse (11) venant coopérer avec le longeron arrière gauche (31) et le longeron arrière droit (32) en position fermée de la porte de coffre (10).

## Description

L'invention porte sur un agencement pour un véhicule comprenant un châssis et une porte de coffre, la porte de coffre comprenant une traverse. L'invention porte encore sur un véhicule comprenant un tel agencement.

Un véhicule automobile comprend généralement une porte arrière offrant un accès depuis l'arrière du véhicule à un espace arrière du véhicule aussi appelé coffre.

Une telle porte de coffre peut être de type hayon. Dans ce cas, un hayon comprend un axe horizontal agencé en haut du hayon en position fermée du hayon. Un tel hayon pivote autour d'un tel axe pour passer d'une position ouverte à une position fermée et vice versa.

Une telle porte de coffre peut être une porte battante. Dans ce cas, une porte battante comprend un axe vertical agencé à droite ou à gauche en position fermée de la porte battante. Une telle porte battante pivote autour d'un tel axe vertical pour passer d'une position ouverte à une position fermée et vice versa.

Une telle porte de coffre s'étend, en position fermée, au-dessus, généralement juste au-dessus, d'un pare-chocs arrière s'étendant généralement transversalement.

Seulement, pour charger des objets tels que des bagages ou marchandises au sein du coffre du véhicule, il convient alors de soulever de tels objets au moins au-dessus du pare-chocs arrière, voire encore plus haut. Une telle manipulation, aussi bien au chargement qu'au déchargement, nécessite un effort pénible, difficile, tout particulièrement en cas d'objets lourds. De plus, de tels gestes ne sont pas ergonomiques pour l'utilisateur si bien qu'ils peuvent occasionner des blessures, notamment au niveau du dos.

L'objectif de la présente invention est de remédier aux inconvénients ci-dessus en fournissant une solution offrant un accès facilité au coffre. L'invention est particulièrement simple et offre en outre un accès aisé à un espace supplémentaire de stockage sous un plancher de coffre arrière.

### Résumé de l'invention

Pour atteindre cet objectif, l'invention porte sur un agencement pour un véhicule, notamment pour un véhicule automobile, comprenant :
- un châssis comprenant un longeron arrière gauche agencé à gauche et un longeron arrière droit agencé à droite,
- une porte de coffre battante ou de type hayon, la porte de coffre s'étendant jusqu'au moins en-dessous des longerons arrière droit et gauche en position fermée de la porte de coffre, la porte de coffre comprenant une traverse venant coopérer avec le longeron arrière gauche et le longeron arrière droit en position fermée de la porte de coffre.

Le longeron arrière gauche peut comprendre une extrémité arrière et une interface gauche fixée à l'extrémité arrière du longeron arrière gauche, l'interface gauche pouvant être destinée à absorber l'énergie d'un choc, et le longeron arrière droit peut comprendre une extrémité arrière et une interface droite fixée à l'extrémité arrière du longeron arrière droit, l'interface droite pouvant être destinée à absorber l'énergie d'un choc.

L'interface gauche et l'interface droite peuvent comprendre chacune une partie tubulaire s'étendant longitudinalement, notamment de section carrée ou rectangulaire, notamment comprenant des trous ménagés au niveau d'au moins une arête longitudinale.

Les parties tubulaires des interfaces gauche et droite peuvent être ouvertes à l'arrière.

La traverse peut comprendre :
- une partie principale s'étendant transversalement ou sensiblement transversalement,
- une protubérance gauche et une protubérance droite, les protubérances gauche et droite pouvant s'étendre longitudinalement depuis la partie principale de la traverse, vers l'avant en position fermée de la porte de coffre,
la protubérance gauche pouvant se loger au sein de la partie tubulaire de l'interface gauche et la protubérance droite pouvant se loger au sein de la partie tubulaire de l'interface droite en position fermée de la porte de coffre, notamment jusqu'au contact entre la partie principale de la traverse et la partie tubulaire de chaque interface.

Les protubérances gauche et droite peuvent être cylindriques ou coniques ou tronconiques ou pyramidales.

La partie principale de la traverse peut avoir une section sensiblement carrée ou rectangulaire, ou peut comprendre au moins deux tubes de section carrée ou rectangulaire pouvant être agencés ou fixés l'un sur l'autre selon la direction verticale.

La porte de coffre peut comprendre un bouclier, notamment agencé transversalement derrière la traverse et au même niveau ou sensiblement au même niveau que la traverse selon la direction verticale en position fermée de la porte de coffre.

Le châssis peut comprendre un espace de stockage agencé entre les longerons arrière gauche et droit, notamment en-dessous des longerons gauche et droit selon la direction verticale.

L'invention porte encore sur un véhicule, notamment un véhicule automobile, comprenant un agencement tel que défini précédemment.

### Présentation des figures

Ces objets, caractéristiques et avantages de la présente invention seront exposés en détail dans la description suivante d'un mode de réalisation faite à titre non-limitatif en relation avec les figures jointes parmi lesquelles:
La figure 1 est une vue schématique en perspective d'un véhicule selon un mode de réalisation de l'invention.
La figure 2 est une vue en perspective partielle du véhicule selon le mode de réalisation de l'invention, une porte de coffre en position ouverte étant partiellement représentée.
La figure 3 est une vue en perspective de la porte de coffre en position ouverte selon le mode de réalisation de l'invention.
La figure 4 est une vue en perspective partielle d'un agencement selon le mode de réalisation de l'invention, la porte de coffre étant ouverte et non représentée.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

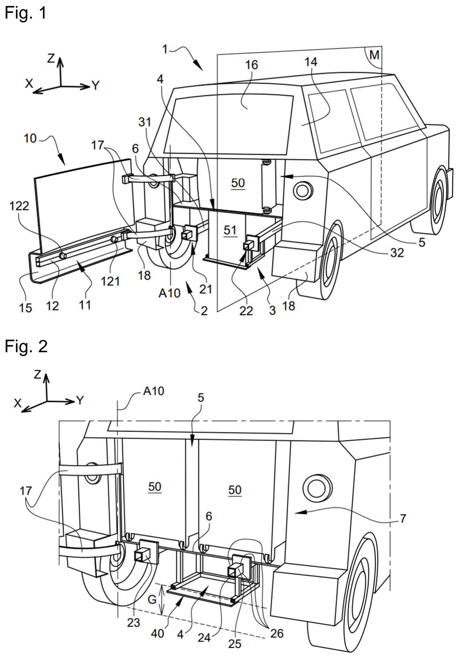

Comme illustré sur la figure 1, un véhicule, de préférence un véhicule automobile 1 comprend un agencement 2.

Plus précisément, l'agencement 2 ou le véhicule 1 comprend un châssis 3. Par « châssis », on entend un ensemble de pièces ou éléments liés entre eux de sorte à former un ensemble structurel apte à supporter notamment des éléments de carrosserie et des équipements. Le châssis 3 comprend notamment un longeron arrière gauche 31 et un longeron arrière droit 32. Le longeron arrière gauche 31 est agencé à gauche et le longeron arrière droit 32 est agencé à droite, de préférence en étant placés à égales distances de part et d'autre d'un plan vertical et longitudinal médian M du véhicule 1. Les longerons 31, 32 s'étendent longitudinalement ou sensiblement longitudinalement vers l'arrière.

Le véhicule 1 ou l'agencement 2 comprend encore une porte de coffre 10. Dans le mode de réalisation illustré, la porte de coffre 10 est une porte battante. Plus précisément, la porte de coffre battante 10 est articulée du côté gauche de sorte à pivoter autour d'un axe A10. De préférence, l'axe A10 s'étend verticalement ou sensiblement verticalement. Ainsi, la porte de coffre 10 pivote, tourne, autour de l'axe A10 pour passer de sa position ouverte à sa position fermée et vice versa. En position fermée, la porte 10 s'étend par exemple sensiblement verticalement et transversalement. Il est à noter que la porte de coffre 10 est illustrée uniquement en position ouverte sur les figures. En position ouverte, la porte 10 s'étend par exemple sensiblement verticalement et longitudinalement. L'ensemble châssis 3 et porte de coffre 10 forme une caisse du véhicule 1, la porte de coffre 10 jouant un rôle structurel comme il sera décrit par la suite.

La porte de coffre 10 s'étend jusqu'au moins en-dessous des longerons arrière droit et gauche 31, 32 selon la direction verticale. Ainsi, la porte de coffre en position fermée s'étend derrière les longerons.

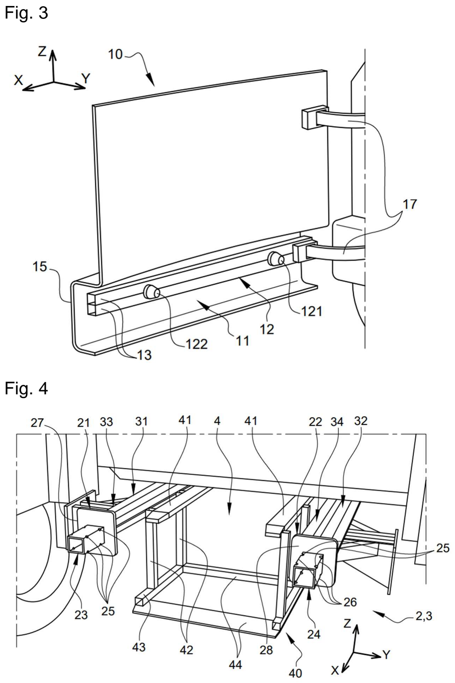

La porte de coffre 10 comprend une traverse 11. Comme illustré sur les figures 1 et 3, la traverse 11 comprend de préférence une partie principale 12 s'étendant transversalement ou sensiblement transversalement (en position fermée de la porte 10). La partie principale 12 a une section sensiblement carrée ou rectangulaire. Avantageusement, la partie principale 12 comprend au moins deux tubes de section carrée ou rectangulaire. Par exemple, dans le mode de réalisation illustré notamment sur la figure 3, la partie principale 12 de la traverse 11 comprend deux tubes 13 de section carrée agencés l'un sur l'autre selon la direction verticale. De préférence, les deux tubes 13 sont fixés l'un à l'autre, par exemple par soudage.

La traverse 11 coopère avec le longeron arrière gauche 31 et le longeron arrière droit 32 en position fermée de la porte de coffre 10.

Avantageusement, comme illustré sur la figure 4, le longeron arrière gauche 31 comprend une extrémité arrière 33. Le longeron arrière gauche 31 comprend encore une interface gauche 21 fixée à l'extrémité arrière 33 du longeron arrière gauche 31. L'interface gauche 21 est destinée à absorber l'énergie d'un choc, en particulier un choc venant depuis l'arrière du véhicule et dirigé vers l'avant du véhicule. De la même manière, le longeron arrière droit 32 comprend une extrémité arrière 34. Le longeron arrière droit 32 comprend encore une interface droite 22 fixée à l'extrémité arrière 34 du longeron arrière droit 32. L'interface droite 22 est destinée à absorber l'énergie d'un choc, en particulier un choc venant depuis l'arrière du véhicule et dirigé vers l'avant du véhicule.

De préférence, l'interface gauche 21 est fixée par boulonnage à l'extrémité arrière 33 du longeron arrière gauche 31 et l'interface droite 22 est fixée par boulonnage à l'extrémité arrière 34 du longeron arrière droit 32. Autrement dit, l'interface gauche 21 est boulonnée à l'extrémité arrière 33 du longeron arrière gauche 31 et l'interface droite 22 est boulonnée à l'extrémité arrière 34 du longeron arrière droit 32. Avantageusement, l'interface gauche 21 comprend une partie tubulaire 23. Comme illustré sur la figure 4, la partie tubulaire 23 a par exemple une section carrée. Alternativement, la section de la partie tubulaire 23 peut être rectangulaire ou circulaire. En cas de section carrée ou rectangulaire, la partie tubulaire 23 comprend au moins un trou 25 ménagé au niveau d'au moins une arête 26 s'étendant longitudinalement de la partie tubulaire 23. De la même manière, avantageusement, l'interface droite 22 comprend une partie tubulaire 24. Comme illustré sur la figure 4, la partie tubulaire 24 a par exemple une section carrée. Alternativement, la section de la partie tubulaire 24 peut être rectangulaire ou circulaire. En cas de section carrée ou rectangulaire, la partie tubulaire 24 comprend au moins un trou 25 ménagé au niveau d'au moins une arête 26 s'étendant longitudinalement de la partie tubulaire 24.

En cas de section carrée des parties tubulaires 23, 24, chaque côté est par exemple compris entre 20 mm et 40 mm.

De préférence, comme illustré sur les figures 2 et 4, les parties tubulaires 23 ; 24 des interfaces gauche 21 et droite 22 sont ouvertes à l'arrière, c'est-à-dire creuse, non fermées, non bouchées.

Comme illustré sur les figures 1 et 3, la partie principale 12 de la traverse 11 comprend une protubérance gauche, ou saillie, ou extension 121 et une protubérance droite, ou saillie, ou extension 122. Les protubérances gauche et droite 121, 122 s'étendent longitudinalement depuis la partie principale 12 de la traverse 11, vers l'avant en position fermée de la porte de coffre 10. Ainsi, en cas de porte battante 10 ouverte de l'ordre de 90 degrés par rapport à la position fermée, comme illustré sur la figure 3, les protubérances 121, 122 s'étendent alors transversalement ou sensiblement transversalement. Plus précisément, une fois la porte battante de coffre 10 fermée, la protubérance gauche 121 se loge au sein de la partie tubulaire 23 de l'interface gauche 21 et la protubérance droite 122 se loge au sein de la partie tubulaire 24 de l'interface droite 22. Ainsi, les protubérances 121, 122 jouent chacune éventuellement un rôle de pilotage, de guidage. De préférence, les extrémités arrière des parties tubulaires 23, 24 de chaque interface 21, 22 viennent alors au contact contre la partie principale 12 de la traverse 11, c'est-à-dire contre le ou les tubes 13, ou sensiblement contre le ou les tubes 13. Eventuellement, un moyen amortissant est interposé à chaque extrémité des parties tubulaires 23, 24 de sorte à amortir le contact contre la partie principale 12, en particulier éviter tout bruit ou claquement. Alternativement, ou en complément, les protubérances 121, 122 comprennent chacune un moyen amortissant de sorte à amortir le contact contre la partie principale 12 lors de la fermeture de la porte de coffre 10. Par exemple, le ou les moyens amortissants sont surmoulés, et/ou comprennent du caoutchouc ou un matériau ayant des propriétés similaires.

Chaque protubérance 121, 122 est conique, tout du moins a son extrémité dirigée vers l'avant (en position fermée de la porte battante 10) comprenant une portion conique ou tronconique de sorte à faciliter son insertion, éventuellement partielle, au sein de la partie tubulaire correspondante. Par exemple, le diamètre externe de chaque protubérance est compris entre 15 mm et 35 mm. Alternativement, chaque protubérance 121, 122 est cylindrique ou pyramidales.

Comme illustré en particulier sur la figure 3, la porte de coffre 10 comprend encore de préférence un bouclier ou pare-chocs 15. De préférence, le bouclier 15 est agencé transversalement derrière la traverse 11, par exemple au même niveau ou sensiblement au même niveau que la traverse 11 selon la direction verticale en position fermée de la porte de coffre 10. Par exemple, le bouclier 15 a une hauteur selon la direction verticale, porte 10 fermée, bien supérieure à la hauteur du ou des tubes 13.

Comme illustré sur les figures 1, 2 et 4, le châssis 3 comprend un espace de stockage 4 agencé entre les longerons arrière gauche et droit 31, 32. Par exemple, l'espace de stockage 4 est également agencé en-dessous des longerons gauche et droit 31, 32 selon la direction verticale.

Plus précisément, l'espace de stockage 4 comprend une structure 40. La structure 40 est par exemple obtenu en associant, en fixant, des éléments plats et/ou tubulaires les uns aux autres. Comme illustré en particulier sur la figure 4, la structure 40 permet de créer de préférence un espace parallélépipédique ou sensiblement parallélépipédique, par exemple en maximisant l'utilisation du volume disponible entre les deux roues arrière, sous, ou sensiblement sous, les longerons 31, 32. De préférence, cette structure 40 s'étend uniquement entre les deux longerons 31, 32, en étant éventuellement symétrique par rapport au plan médian M. Par exemple, la structure 40 comprend deux bras ou supports 41 s'étendant longitudinalement vers l'arrière. Par exemple, deux extensions 42 s'étendent verticalement vers le bas depuis chaque bras 41. Par exemple, un élément longitudinal 43 s'étendant longitudinalement, sous ou sensiblement sous, chaque bras 41 est fixé aux deux extensions 42 s'étendant d'un côté du châssis 3. Un ou plusieurs éléments transversaux 44 s'étendant transversalement est ou sont fixé(s) à chaque élément 43. Par exemple, la structure 40 est mécano soudée, et/ou comprend des éléments boulonnés les uns aux autres. Par exemple, les bras 41 sont fixés, de préférence soudés, au châssis 3, par exemple aux longerons 31, 32, et/ou à une traverse (non représentée) du châssis 3.

Eventuellement, comme illustré en particulier sur la figure 1, le véhicule 1 comprend une partie supérieure arrière 14. De préférence, cette partie arrière 14 comprend une vitre arrière ou lunette arrière 16. Par exemple, la partie supérieure arrière 14 fait partie de la porte de coffre 10. Eventuellement, la partie supérieure 14 peut se déconnecter du reste de la porte de coffre. Par « déconnecter », on entend se dissocier, c'est-à-dire rester en position fermée alors que le reste de la porte de coffre est ouvert comme c'est le cas sur la figure 1. Alternativement, la partie 14 reste à demeure sur le châssis et ne peut pas être ouvert pour offrir un plus vaste accès au coffre. Alternativement encore, seule la lunette arrière 16 est munie de moyens pour permettre son ouverture via une articulation par exemple par rapport à la partie 14 fixe.

Alternativement, selon une variante non illustrée, l'axe de pivotement de la porte de coffre 10 peut être agencé à droite et la porte pivote autour de cet axe vertical ou sensiblement vertical.

Alternativement encore, selon une variante non illustrée, la porte pivote autour d'un axe s'étendant longitudinalement, en haut d'une façade arrière du véhicule par exemple. La porte est alors de type hayon. Dans ce cas, comme dans le mode de réalisation illustré, la porte de coffre comprend une traverse. Une telle traverse coopère avec des longerons de la caisse en position fermée de la porte de coffre de la même manière que ce qui est exposé précédemment.

En résumé, la solution porte sur l'agencement 2 comprenant le châssis 3 pourvu des longerons 31, 32 et de la porte arrière 10, de préférence battante, pour fermer le coffre 5. La porte de coffre 10 comprend la traverse 11. La solution permet d'offrir une zone de chargement supplémentaire, particulièrement basse, de préférence la plus basse possible. Cela est particulièrement bénéfique lorsque le coffre 5 est peu volumineux, ce qui est le cas dans des petits véhicules, en particulier destinés à une utilisation citadine. De préférence, la solution offre l'espace de stockage 4 sous un plancher 6 du coffre 5 (voir figure 1). Ainsi, un tel espace 4 généralement « perdu », entre les longerons arrière 31, 32 sous le plancher du coffre 6, devient utilisable et accessible. Surtout, le fait que la porte de coffre embarque la traverse 11 et le bouclier arrière 15 permet une ouverture extrêmement basse. Ainsi, d'une part une fois la porte 10 ouverte on accède directement à toute une face arrière 7 de l'espace de stockage 4 et d'autre part cet espace de stockage 4 est très bas. En cas d'espace de stockage 4 parallélépipédique, la face arrière 7 s'étend de préférence verticalement et transversalement en ayant une section en forme de rectangle, éventuellement en forme de carré. Le bouclier 15 et la traverse 11 faisant partie de la porte 10, ils ne gênent pas l'accès à cet espace 4.

Grâce à la porte de coffre 10 s'étendant jusqu'en bas de l'arrière du véhicule, en-dessous du bouclier arrière 15, il devient possible de charger l'espace de chargement du coffre 5 ainsi que l'espace de stockage inférieur 4, agencé sous le plancher 6 du coffre 5, éventuellement juste en-dessous. Ainsi, il n'est pas utile de soulever les objets à charger dans l'espace 4 à une hauteur conséquente. Par exemple, la garde au sol G (voir figure 2), ou hauteur depuis le sol, du bas de l'espace de stockage 4 est compris entre 10 cm et 30 cm.

Ainsi, un des avantages de la solution est l'amélioration de l'ergonomie, la diminution des efforts à fournir, en particulier en cas d'objet lourd à charger dans l'espace de stockage 4. Avantageusement, en cas d'objet 51 lourd et peu encombrant (voir figure 1), l'espace de stockage 4 est à privilégier pour les facilités qu'il offre par rapport au coffre 5. Il suffit de soulever l'objet de quelques cm pour permettre de l'insérer dans l'espace 4. Ceci est aisé par rapport au chargement d'un objet lourd dans un coffre d'un véhicule équipé d'un pare-chocs arrière qu'il faut au minimum franchir en termes de hauteur, et éventuellement, pour lequel il convient d'abaisser l'objet lourd devant le pare-chocs afin de le déposer sur le plancher du coffre plus bas que le pare-chocs ou bouclier. Autrement dit la solution permet d'abaisser le seuil de chargement dans un coffre de véhicule, la hauteur d'ouverture de la porte de coffre s'étendant davantage vers le bas, c'est-à-dire à proximité du sol.

Eventuellement, comme illustré en particulier sur les figures 1 et 2, le coffre 5 est privilégié pour mettre un ou plusieurs bagages 50, par exemple de type valise.

Comme évoqué précédemment, la porte de coffre 10 embarque la traverse 11 qui est destinée à encaisser des chocs arrière ou provenant sensiblement de l'arrière. La traverse 11 a ainsi la fonction de retenue pour les chocs arrière conséquents ainsi que les petits chocs plus limités. C'est notamment pour cela que la longerons 31, 32 comprennent les interfaces ou boitiers 21, 22 aussi connues sous l'appellation anglo-saxonne « crash box ». En effet, les interfaces sont destinées à se comprimer, se déformer de sorte à encaisser, absorber l'énergie d'un choc arrière. C'est notamment pour faciliter cet écrasement qu'on ménage des trous 25 dans les parties tubulaires 23, 24, de préférence au niveau des arêtes longitudinales. En outre, en cas de choc arrière de petite intensité, il est possible de changer uniquement la porte de coffre 10 et les interfaces 21, 22 si elles sont pliées, détériorées. Pour rappel, chaque interface 21, 22 est fixée au longeron correspondant 31, 32 via la platine 27, 28, de préférence via un montage boulonné, vissé. Par exemple, comme illustré sur la figure 4, chaque platine 27, 28, éventuellement en forme de plaque carrée comprend quatre trous, et l'extrémité arrière de chaque longeron comprend une plaque de dimensions sensiblement identiques ayant des trous disposés aux mêmes endroits. L'extrémité arrière de chaque longeron est alors fixé via quatre boulons traversant les trous des interfaces et des extrémités de chaque longeron. Ainsi, les interfaces 21, 22 sont aisément et rapidement démontables par rapport aux longerons. Il en résulte une baisse des frais de réparation lors de petits accrochages n'ayant aucun dommage sur les longerons. Ce gain se répercute sur les coûts d'assurance du véhicule et permet d'obtenir une note ou cotation bénéfique de la part des sociétés d'assurance pour ce véhicule.

Comme évoqué, l'intégration de la traverse arrière 11 dans l'ouvrant arrière 10 permet de garder la fonction de retenue aux crashs et aux petits chocs. L'ajout à la traverse 11 des pilotes, guides ou pions 121, 122 venant pénétrer dans chaque longeron 31, 32, de préférence dans chaque interface 21, 22, lorsque l'ouvrant est fermé concourt à améliorer l'absorption des chocs, en particulier en dirigeant les efforts dans chaque partie tubulaire 23, 24 des interfaces 21, 22.

Comme illustré sur la figure 2, à l'ouverture de la porte 10, tout le coffre demeure accessible, en particulier jusqu'en bas de l'espace de stockage 4, c'est-à-dire sous le plancher 6 du coffre 5. Par exemple la structure 40 de l'espace 4 est recouverte de tôles et/ou de parois afin d'isoler l'espace 4 de l'extérieur, notamment d'assurer son étanchéité vis-vis des projections d'eau et/ou salissures rencontrés habituellement au niveau du train de roues arrière.

Bien que l'accès illustré sur les figures soit commun pour le coffre 5 et l'espace de stockage inférieur 4, éventuellement, l'accès à l'espace 4 peut être indépendant de l'accès au coffre 5.

Eventuellement, il est possible d'accéder à l'espace 4 depuis le coffre, par exemple en soulevant le plancher 6 alors amovible, tout du moins apte à pivoter.

Eventuellement, une doublure (non illustrée) vient cacher au moins partiellement la partie principale 12 de la traverse 11, tout en laissant dépasser les protubérances 121, 122, de sorte à améliorer l'esthétique du bas de la porte 10 en position ouverte.

Par exemple, comme illustré sur la figure 1, la porte battante arrière 10 comprend une structure métallique et un habillage plastique ou en tôle d'acier ou encore d'alliage d'aluminium. Par exemple, la porte comprend deux cols de cygne 17 agencés pour créer une charnière permettant la fermeture et l'ouverture de la porte 10 par rapport au châssis 3 autour de l'axe A10. Avantageusement, la structure de la porte comprend la traverse 11 et l'un des cols de cygne 17, de préférence celui agencé en bas, est fixé à la traverse. Ainsi, la traverse 11 a également un rôle structurel pour la porte de coffre 10. Autrement dit, la porte de coffre, le cas échéant le hayon, comprend la traverse extrême arrière 11 en partie inférieure de sa structure.

Comme évoqué, la porte arrière 10, plus précisément son habillage, comprend la partie centrale du bouclier arrière. En ouvrant intégralement la porte 10 on accède au coffre 5 ainsi qu'à l'espace supplémentaire inférieur 4 agencé en partie basse.

De préférence, comme illustré sur la figure 3, la partie principale 12 de la traverse 11 comprend un profilé muni de deux corps creux 13, par exemple tubulaires, joints, fixés l'un à l'autre. Une telle structure de traverse est avantageuse en termes d'amorti, d'absorption d'énergie lors d'un choc arrière tout en ayant une masse faible. La partie principale 12 comprend par exemple une face sensiblement verticale et transversale orientée vers l'avant lorsque la porte est fermée. Pour rappel, cette face de la partie principale comprend les deux pions 121, 122 dirigés vers l'avant lorsque la porte est fermée. Par exemple, les deux pions sont cylindriques et comprennent des extrémités ou embouts coniques s'étendant vers l'avant du véhicule porte fermée. En effet, les embouts 121, 122 viennent s'insérer dans les partie tubulaires 23, 24 de chaque longerons 31, 32. Ainsi, en cas de choc arrière sur le bouclier 15, l'énergie est transmise à la traverse 11 et au moins à un des pions 121 ; 122 qui transmet à son tour l'énergie à la partie tubulaire concernée. Evidemment, en cas de gros choc arrière, les deux pions 121, 122 transmettent les efforts aux deux interfaces 21, 22 de type « crash box », ce qui engendre la déformation, l'écrasement, le pliage des interfaces, en particulier du fait des trous 25 ménagés sur les arêtes 26 des parties tubulaires 23, 24 de préférence de section carrée. Pour rappel, l'interface gauche 21 est liée, fixée au longeron arrière principal gauche 31, en particulier à l'extrémité arrière 33 du longeron gauche 31, de préférence via des boulons, et l'interface droite 22 est liée, fixée au longeron arrière principal droit 32, en particulier à l'extrémité arrière 34 du longeron droit 32, de préférence via des boulons.

À la fermeture de la porte 10, les deux pions 121, 122 sont engagés à l'intérieur des profilés, des parties tubulaires 23, 24, de préférence de section carrée. Ainsi, une liaison physique et pilotée entre la traverse extrême arrière 11 et la structure du châssis ou caisse est assurée par l'intermédiaire des interfaces 21, 22. La solution permet donc de conserver un châssis robuste grâce à la liaison entre la traverse et le reste du châssis via les longerons arrière. Comme évoqué, cela permet de tenir les efforts de chocs arrière nécessaires pour l'homologation du véhicule. Lors de la fermeture de la porte arrière battante, la solution permet de retrouver un bon pilotage et un centrage de la traverse arrière grâce à ses pions 121, 122 s'emmanchant dans les longerons 31, 32, plus précisément dans les interfaces respectives 21, 22. Ainsi, la traverse 11 permet de jouer le rôle d'une partie structurelle inférieure de la porte de coffre 10. Eventuellement, la solution permet de réduire la masse du véhicule 1. La solution offre un compromis entre tenue au choc arrière et zone de compression via les interfaces 21, 22. Comme évoqué, cela permet de réparer facilement les conséquences d'un petit choc arrière ce qui abaisse les coûts d'assurance d'un tel véhicule et peut constituer un argument de vente, en particulier lors d'un achat d'une flotte conséquente de véhicules. Ainsi, seule la porte 10, et/ou la traverse 11, et/ou les interfaces 21, 22, peuvent être changées en après-vente, ce qui évite une intervention lourde engendrant une immobilisation longue et coûteuse du véhicule. De préférence, seule la partie centrale 15 du bouclier arrière est fixée sur la porte 10, c'est-à-dire la partie du bouclier s'étendant sensiblement transversalement lorsque la porte 10 est fermée. Ainsi, éventuellement, des portions de bouclier 18 (voir figure 1) s'étendent de part et d'autre du bouclier 15 lorsque la porte 10 est fermée, par exemple une portion 18 à droite et une portion 18 à gauche.

La solution permet donc de dégager la partie basse du coffre arrière afin d'obtenir un volume de chargement supplémentaire 4. Cela permet de ranger, entreposer, transporter un ou d'autres bagages 51, éventuellement de type valise. Ainsi, la solution offre un complément à la partie principale du coffre 5, en particulier sous le coffre 5. Comme évoqué, le seuil de chargement de l'espace 4 est très bas grâce à l'accessibilité offerte par la porte de coffre s'étendant sous le bouclier arrière et embarquant ce bouclier arrière. L'espace 4 se charge et se décharge très facilement, même en cas d'objets lourds, la distance par rapport au sol étant faible. Autrement dit, on minimise les efforts nécessaires pour le chargement et le déchargement de l'espace 4 par rapport à ceux du coffre.

Eventuellement, l'espace de stockage 4 est utilisé pour un appareil électronique. Avantageusement, l'espace de stockage 4 permet de loger une batterie de traction et/ou de propulsion du véhicule 1. Le cas échéant, cette batterie est éventuellement amovible, c'est-à-dire qu'elle peut être aisément retirée de l'espace 4, par exemple pour la recharger en dehors du véhicule. Ainsi, le véhicule peut par exemple fonctionner en alternant l'utilisation d'au moins deux batteries. Pendant qu'une batterie est logée dans l'espace 4 et utilisée pour mouvoir le véhicule, l'autre batterie est en cours de recharge en dehors du véhicule. Quoi qu'il en soit, en cas de logement 4 destiné à une batterie, l'espace 4 est alors équipé de moyens de connexion électrique pour une ou de telles batteries et/ou de moyens de mise en sécurité de telles batteries et/ou de renforts latéraux et/ou supérieur et inférieur pour empêcher la détérioration d'une telle batterie en cas d'accident subi par le véhicule.

De préférence, la traverse 11, en particulier ses tubes 13 sont en acier ou en alliage d'aluminium. D'autres dimensions, formes, matière sont possibles pour la traverse 11. Il en est de même pour les cols de cygne 17 permettant le pivotement par rapport à l'axe de charnière A10, de préférence en acier. Les pions de centrage 121, 122 peuvent avoir une forme et/ou une matière et/ou une taille différente de celle décrite précédemment. De préférence, le matériau des pions est le même que celui de la partie principale 12 de la traverse. Il en est de même pour les interfaces, de préférence avec le même matériau que les longerons, par exemple de l'acier. Alternativement, afin de favoriser la compression en cas de choc des interfaces, leur matériau peut être différent, avec une résistance moindre, par exemple un alliage d'aluminium alors que les longerons sont en acier. Là encore, les dimensions, formes des interfaces, en particulier de leur partie tubulaire peut varier.

Bien que cela ne soit pas illustré, la porte de coffre peut être revêtue d'une doublure intérieure, par exemple en plastique ou autre. La partie du bouclier 15 peut faire partie de la peau ou garniture externe de la porte 10 ou être fixée à celle-ci en étant indépendante.

Evidemment, le volume de l'espace supplémentaire 4 dépend de l'entraxe selon la direction transversale des deux longerons et/ou des interfaces 21, 22, et/ou de la hauteur disponible, et/ou d'éventuelles éléments architecturaux, et/ou de composants équipant le véhicule, et/ou de contraintes liées à l'utilisation du véhicule, par exemple une garde au sol devant être conséquente eu égard à une utilisation tous terrains. Le plancher 6 du coffre 5 peut être amovible de sorte à permettre une communication entre les deux espaces de stockage 4, 5.

En résumé, la solution facilite le chargement /déchargement d'objets tels que des bagages, marchandises, voire une ou plusieurs batteries, en abaissant la hauteur à laquelle de tels objets doivent être soulevés. On évite ainsi des manipulations nécessitant des efforts pénibles, difficiles, tout particulièrement en cas d'objets lourds. Surtout, on évite des gestes peu, voire pas ergonomiques, pour l'utilisateur si bien qu'on lui évite des blessures, notamment au niveau du dos.

En remarque, la solution atteint donc l'objectif recherché de faciliter le chargement / déchargement au sein d'un espace de stockage arrière tout en offrant un espace de stockage supplémentaire en partie basse du châssis et peut par conséquent être adaptée à des véhicules automobiles de tous types et de toutes gammes, par exemple de type SUV ou monospace ou fourgon ainsi qu'à d'autres véhicules tels que des camions, à condition qu'un espace soit disponible en partie basse arrière.

## Revendications

1. Agencement (2) pour un véhicule (1), notamment pour un véhicule automobile, comprenant :
- un châssis (3) comprenant un longeron arrière gauche (31) agencé à gauche et un longeron arrière droit (32) agencé à droite,
- une porte de coffre (10) battante ou de type hayon, la porte de coffre (10) s'étendant jusqu'au moins en-dessous des longerons arrière droit et gauche (31, 32) en position fermée de la porte de coffre (10), la porte de coffre (10) comprenant une traverse (11) venant coopérer avec le longeron arrière gauche (31) et le longeron arrière droit (32) en position fermée de la porte de coffre (10).

2. Agencement (2) selon la revendication précédente, **caractérisé en ce que** le longeron arrière gauche (31) comprend une extrémité arrière (33) et une interface gauche (21) fixée à l'extrémité arrière (33) du longeron arrière gauche (31), l'interface gauche (21) étant destinée à absorber l'énergie d'un choc,
et **en ce que** le longeron arrière droit (32) comprend une extrémité arrière (34) et une interface droite (22) fixée à l'extrémité arrière (34) du longeron arrière droit (32), l'interface droite (22) étant destinée à absorber l'énergie d'un choc.

3. Agencement (2) selon la revendication précédente, **caractérisé en ce que** l'interface gauche (21) et l'interface droite (22) comprennent chacune une partie tubulaire (23 ; 24) s'étendant longitudinalement, notamment de section carrée ou rectangulaire, notamment comprenant des trous (25) ménagés au niveau d'au moins une arête longitudinale (26).

4. Agencement (2) selon la revendication précédente, **caractérisé en ce que** les parties tubulaires (23 ; 24) des interfaces gauche (21) et droite (22) sont ouvertes à l'arrière.

5. Agencement (2) selon la revendication précédente, **caractérisé en ce que** la traverse (11) comprend :
- une partie principale (12) s'étendant transversalement ou sensiblement transversalement,
- une protubérance gauche (121) et une protubérance droite (122), les protubérances gauche et droite (121, 122) s'étendant longitudinalement depuis la partie principale (12) de la traverse (11), vers l'avant en position fermée de la porte de coffre (10),
la protubérance gauche (121) se logeant au sein de la partie tubulaire (23) de l'interface gauche (21) et la protubérance droite (122) se logeant au sein de la partie tubulaire (24) de l'interface droite (22) en position fermée de la porte de coffre (10), notamment jusqu'au contact entre la partie principale (12) de la traverse (11) et la partie tubulaire (23 ; 24) de chaque interface (21 ; 22).

6. Agencement (2) selon la revendication précédente, **caractérisé en ce que** les protubérances gauche et droite (121, 122) sont cylindriques ou coniques ou tronconiques ou pyramidales.

7. Agencement (2) selon l'une des revendications 5 ou 6, **caractérisé en ce que** la partie principale (12) de la traverse (11) a une section sensiblement carrée ou rectangulaire, ou comprend au moins deux tubes de section carrée ou rectangulaire agencés ou fixés l'un sur l'autre selon la direction verticale.

8. Agencement (2) selon l'une des revendications précédentes, **caractérisé en ce que** la porte de coffre (10) comprend un bouclier (15), notamment agencé transversalement derrière la traverse (11) et au même niveau ou sensiblement au même niveau que la traverse (11) selon la direction verticale en position fermée de la porte de coffre (10).

9. Agencement (2) selon l'une des revendications précédentes, **caractérisé en ce que** le châssis (3) comprend un espace de stockage (4) agencé entre les longerons arrière gauche et droit (31, 32), notamment en-dessous des longerons gauche et droit (31, 32) selon la direction verticale.

10. Véhicule (1), notamment véhicule automobile, **caractérisé en ce qu'**il comprend un agencement (2) selon l'une des revendications précédentes.
